Europäisches Patentamt

European Patent Office

Office européen des brevets

(19)

(11) Publication number : **0 489 677 A1**

(12) **EUROPEAN PATENT APPLICATION**

(21) Application number : **91500049.1**

(22) Date of filing : **25.05.91**

(51) Int. Cl.⁵ : **G01G 19/00**

(30) Priority : **30.11.90 ES 9003064**

(43) Date of publication of application :
**10.06.92 Bulletin 92/24**

(84) Designated Contracting States :
**AT BE CH DE DK FR GB GR IT LI LU NL SE**

(71) Applicant : **D. FERRAN PADRO I RUBI**
**Carretera de Vic, 185-187**
**E-08240 Manresa (Barcelona) (ES)**

(72) Inventor : **D. FERRAN PADRO I RUBI**
**Carretera de Vic, 185-187**
**E-08240 Manresa (Barcelona) (ES)**

(74) Representative : **Aguilar Forment, Domenec (ES)**
**c/o Aguilar & Revenga Puerto Principe, 7**
**E-08027 Barcelona (ES)**

(54) **Electronic weighting head with external printer for lorry-weighting scales.**

(57) It incluides an electronic coin (1) unit with a printed circle, an alphanumerical printer fed with a roll of paper tape and a cutter for making tickets, a number display with a programming keyboard and two sing display screens, and an extensiometric transducer rich can be attached to the mechanical device of scales generating signals which can be couverted into sings indicating the weight measured.

It may be used, after coin or card insertion, for automatic weighting of the load of a lorry.

Fig. 2

EP 0 489 677 A1

The new head will be used for the weighting of transport lorries and it is designed to be used by the lorry driver, without constant attention of the scales by a supervisor being required, the only operation being the insertion by the user of coins or a card into a device designed specifically for this purpose.

It is well-known that lorry-weighting scales for public use normally require the constant presence of an operator to handle the operating devices of those machines for at least the whole of a working day, which, when there are very few requests for weighting, is not used to the full.

The electronic head which is the object of this patent has been designed so that the weighting operation can be carried out by the driver of a loaded lorry, without requiring the services of a scales operator. For this purpose the head will be operated by coins or a magnetic card thanks to a device specially designed for this purpose, and so there will be no need for a scales attendant, and they can be used at any time of day.

The head includes a coin device and a numerical viewer, made up of several units which may either be connected or alternatively separate, depending on the features of the weighting equipment.

The electronic head operates on the basis of signals received via a transducer attached to the scales which sends signals referring to size in proportion to the weight measured by them. The transducer is load cell in type and its output is proportional to the size of the weight measured. The signals are analogically and digitally processed by a unit which forms part of the head and rich, by means of a parallel digital output, sends weight, date, time and other data to an external printer connected to the automatic coin unit and which issues a coupon or ticket containing the aforementioned data.

In order to simplify the explanation, this report is accompanied by drawings in which, for illustrative and not restrictive purposes, there is a picture of a model case of an electronic weighting head, with external printer, made for lorry-weighting scales, according to the principles of the claims.

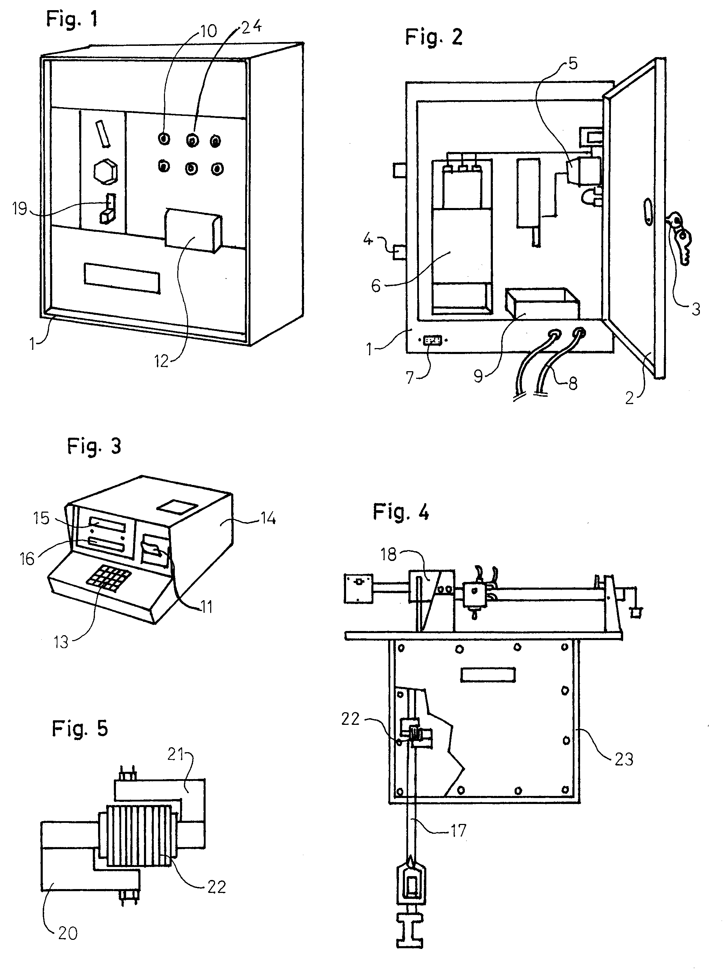

The electronic coin unit, shown in figures 1 and 2, consists of a box-cabinet (1), with a rear door (2), equipped with a safety locking device (3) with a key and means (4) for fixing to a wall or support, with safety guarantees referring to provision against the risk of the door being opened and the inner assembly components handled. The door (2) is scarcely visible from the outside and may only be opened by an authorised person.

The machine also includes a printed circuit board (5) for operating the system, generating orders for the operation of the printer (8) and the paper cutter, and illuminating indicator pilot lights. The printer is alphanumerical in type, with a large number of columns, for example, twenty, fed by means of a roll of paper tape from which the tickets shall be obtained, issued by the machine.

The output connector (7) is used to attach the printer, while the cable (8) belongs to the machine's power connection to the mains current.

The drawer (9) collects the coins inserted, which in the event of power failure are returned through the groove (19).

The pilots lights (10) indicate the in-service status of the machine, and the pilot light (24) indicates the paper ticket outlet (11) through the groove (12).

The printer (6) connected to the machine will only operated when a signal is generated by the coin unit, caused by the insertion of coins into the appropriate device and in the correct amount according to the preset price, which in turn is previously programmed by means of binary selection obtained by microswitches (13) designed for this purpose.

Once the ticket has emerged, normally five seconds after coin insertion and through the groove (12), the viewer sends a signal which will operate the paper cutter to cut the paper tape, and the operation is completed.

The coin unit has fully electronic configuration, and its advantage over its equivalent mechanical machines, is the practical impossibility of jamming or operating with invalid coins. Coin detection is carried out by oscillating resonance, when they pass through a coil which analyses the composition of the metal and the dimensions of the coins, with possible rejection of any that do not meet the conditions stipulated. The coin unit can operate with various coin combinations, for example, six, for making up the amount in different ways.

The numerical viewer (14), shown in figure 3, includes a display (15) of the weight measured, on the basis of six digits large enough to be read easily. Another indicator (16), with up to eight digits, for example, which may be smaller than the former one, will indicate the tariff. There small be devices to receive coins of different values, for example, of 25 and 100 pesetas. The ticket issued by the machine shall preferably include a heading, the date of the operation, the time, the size of the weight measured and other data. As has been mentioned, the viewer (14) may be built into the coin unit shown in figures 1 and 2 or alternatively, may be separate from it.

The viewer circuit, with a large memory capacity, has automatic zero correction, that is to say, an automatic tare system rich keeps the reading at zero before carrying out a weighting operation. In this way, compensation will be made for the extra weight possibily caused by the presence of mud, snow, dust, ice or other materials deposited on the platform. The automatic tare also compensates for possible variations due to excessive degrees of temperature.

The adaptor device, shown in figure 4, includes a set of mechanical and electronic parts witch are attached to the end stay (17) wich links the last lever of the scales mechanism with the appropiato head or weighbeam (18). It is made up basically of two metal pieces (20) and (21) attached to the ends of and electronic flexion cell or load cell (2).

Each one of these pieces carries an attachment for connecting it to the respective firing rod, linking the top one (21) with the head or weihbeam (18) and the bottom one (20) with the last lever (17) of the scales mechanism. Their attachment to the weighting machine can easily be checked, by replacing the set of metal pieces, load cell and firing rods to the original firing rod, whereby the scales may continue operating as an exclusively mechanical machine when desired, and the stresses transmitted by the correcting rod, without being modified, are also now picked up by the strain gauges carried by the elctronic cell and converted into electric signals sent to the control unit.

Once the adaptor in figure 5 has been incorporated into conventional scales (23), attached to the stress transmitting rod for measurement, as well as the automatic coin unit (1) and the viewer (14) connected to it, the operating sequence of the scales, thus automated, is as follows:

The driver places this lorry on top of the weighting platform: the weight of the lorry with is load appears on the display of the unit shown in figure 3. The driver inserts the correct coins for the price set into the appropriate groove of the automatic coin unit; the unit shown in figure 3 receives the signal from the electric coin unit and sends the data to the external printer, built into the machine, with prints the appropriate ticket and issues it trough the groove, and when the paper is cut the operation is complete. Apart from the possibilities described, the head may operate with automatic three-figure tariff selection according to the weight-price correlation, the features of the viewer in figure 3 being modified by replacing the printed circuit boards and incorporating extra mechanisms.

It is also possible to obtain tickets by using a coded magnetic card or alternatively a standardised plastic card, incorporating a car reader for this purpose.

Another possibility is to obtain the ticket after inserting a printed card with a bar code bearing the coded indication of the vehicles tare. The card would be made by company owning the scales. This would make it possible to record all the weightings carried out during a certain period of time, for example, one month, and prepare the bills and payment for the weighting services at the end of this period. For this purpose, the coin unit would include a slide-type bar code reader, which could be bolcked from the inside.

The electronic head described may also be attached to totally electronically-operating scales, the adaptation or load cell system being unnecessary.

NOTE

To sum up, the privilege of exclusive use which is requested, shall rest upon the following claims:

## Claims

1. Electronic weighting head, with external printer for lorry weighting scales, designed for automatic weighting of a lorry load, after insertion of coins or magnetic cards, characteristed essentially by including a machine consisting of a coin device, a board with the printed circuit of an electronic assembly, a power circuit, an alphanumerical printer fed by means of a roll of paper tape with a cutter which makes tickets, indicating the price of the service, a number display with a machine-programing keyboard, and an adaptor connected to the mechanical device of the scales to act as a weight tranducer to electric signals which in turn are processed by the machines circuit.

2. Electronic weighting head, with external printer, for lorry-weighting scales, according to Claim 1, characterised because the coin device includes an electronic assembly housed inside a tough metal-cased box, equipped with means of wall-fixing and with a door cover at the rear, an entry device, coin select and return, a coin-collecting drawer, anelectronic command-generating circuit and a printer with alphanumerical characters and continuous paper tape roll feed, cutter for tape cutting and ticket making and electrical connection device.

3. Electronic weighting head, with external printer, for lorry-weighting scales, according to claim 2, characterised because the coin device includes card device with groove for inserting non-magnetic coded cards, as well as a weighting counter and an auxiliary power feed device on the basis of accumulators for operating in case of mains power failures.

4. Electronic weighting head, with external printer for lorry-weighting scales, according to claim 1, characterised because the number display unit icludes an electronic circuit for data-processing with memory capacity, a programming keyboard, a numerical indicator including a clock and a calendar, automatic zero correction for tare compensation and zero-setting prior to each weighing.

5. Electronic weighting head with external printer for lorry-weighting scales acccording to claim 1, characterised because the device for adapting to the scales mechanism includes two metal components connected to the ends of and electronic flexion cell, with respective attachments for the last lever of the scales and for its weighting head, permitting at all times exclusively mechanical operation of the scales, with signal output from the decive for attaching themto the circuit housed in the coin unit.

Fig. 1

Fig. 2

Fig. 3

Fig. 4

Fig. 5

European Patent Office

# EUROPEAN SEARCH REPORT

Application Number

| DOCUMENTS CONSIDERED TO BE RELEVANT | | | EP 91500049.1 |
|---|---|---|---|
| Category | Citation of document with indication, where appropriate, of relevant passages | Relevant to claim | CLASSIFICATION OF THE APPLICATION (Int. Cl.5) |
| A | US - A - 4 605 081 (HELMY JR. et al.) * Totality * | 1 | G 01 G 19/00 |
| A | DE - C - 44 941 (EDMOND CASIMIR MARC) * Totality * | 1 | |
| A | GB - A - 254 065 (FRANK BERNHARD DEHN) * Totality * | 1 | |
| A | DE - A - 3 238 469 (M.A.N. MASCHINENFABRIK AUGSBURG NÜRNBERG AG) * Totality * | 1 | |
| A | CH - A - 560 431 (WILLIAM F. CASTLE et al.) * Totality * ──── | 1 | TECHNICAL FIELDS SEARCHED (Int. Cl.5) G 07 F 17/00 G 01 G  1/00 G 01 G 19/00 G 01 G 23/00 G 06 K  1/00 |

The present search report has been drawn up for all claims

| Place of search | Date of completion of the search | Examiner |
|---|---|---|
| VIENNA | 06-03-1992 | BEHMER |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)